# FASCICULE DE BREVET EUROPEEN

(11) **EP 2 938 891 B1**
(45) Date de publication et mention de la délivrance du brevet: **01.03.2017**
(21) Numéro de dépôt: 13815517.1
(22) Date de dépôt: 23.12.2013
(51) Int. Cl.: G21C 19/07, G21C 19/19, F16B 5/02, F16B 5/07

(54) **DISPOSITIF D'ACCROCHAGE ET INSTALLATION NUCLÉAIRE COMPRENANT UN TEL DISPOSITIF D'ACCROCHAGE**
ANKERVORRICHTUNG UND KERNKRAFTANLAGE MIT EINER DERARTIGEN ANKERVORRICHTUNG
ANCHOR DEVICE AND NUCLEAR FACILITY COMPRISING SUCH AN ANCHOR DEVICE

(30) Priorité: 26.12.2012 FR 1262800
(43) Date de publication de la demande: 04.11.2015
(73) Titulaire: AREVA NP, 92400 Courbevoie (FR)
(72) Inventeur: BRESOUS, Luc, F-42510 Bussieres (FR); ROILLET, Serge, F-69007 Lyon (FR)
(74) Mandataire: Lavoix
(86) Numéro de dépôt international: PCT/EP2013/077945
(87) Numéro de publication internationale: WO 2014/102255

(56) Documents cités:
- FR-A1- 2 684 481
- US-A- 4 019 298
- US-A- 5 244 300
- US-A1- 2007 154 257
- US-A1- 2012 128 114
- US-B1- 6 343 107

## Description

La présente invention concerne un dispositif d'accrochage, pouvant par exemple être utilisé pour suspendre un outil ou une alvéole de réception d'assemblage de combustible nucléaire dans une installation nucléaire, en particulier dans une piscine d'une centrale nucléaire.

Une centrale nucléaire comprend en général un bâtiment de réacteur nucléaire à l'intérieur duquel se trouve un réacteur nucléaire immergé dans une piscine remplie d'eau et constitué entre autres d'une cuve contenant un coeur composé d'une pluralité d'assemblages de combustible disposés côte à côte à l'intérieur de la cuve, et au moins un bâtiment appelé bâtiment combustible, attenant au bâtiment de réacteur nucléaire et renfermant généralement au moins une piscine de stockage du combustible usé qui peut être mise en communication avec la piscine du réacteur nucléaire. L'eau assure une protection contre les radiations.

Les opérations d'examen et si nécessaire de réparation des assemblages de combustible, de préparation du chargement du réacteur en assemblages de combustible neufs ou en assemblages de combustible partiellement irradiés et éventuellement réparés, et les opérations d'évacuation des assemblages de combustible usés sont en général effectuées sous eau dans la piscine du bâtiment combustible.

Pour la réalisation de ces opérations de chargement, de maintenance et d'évacuation, il est souhaitable de pouvoir stocker ou manipuler des outils ou des assemblages de combustible nucléaire dans la piscine, et de disposer, pour cela, d'un ou plusieurs dispositifs d'accrochage sous eau.

FR 2 684 481 A1 divulgue un support d'outils comprenant des rainures de largeur décroissante et à profil en queue d'aronde pour la réception de tenons de forme complémentaire prévus sur des outils destinés à être accrochés sur le support.

Néanmoins, ce support d'outils présente un risque de décrochage dans des conditions particulières, par exemple dans le cas d'un séisme pouvant avoir une magnitude importante, au moins dans certaines zones d'implantation des centrales nucléaires.

US 5 244 300 A, US 4 019 298 A et US 2007/0154257 A1 divulgue des dispositifs d'accrochage à parties mâles et parties femelles complémentaires.

US 2012/0128114 A1 divulguent des racks de réception d'assemblages de combustible nucléaire irradiés, les racks comprenant des parties mâles et des parties femelles complémentaires pour lier les plaques entre elles.

US 6 343 107 B1 divulgue un appareil de réparation pour une enveloppe interne d'un réacteur nucléaire, l'appareil de réparation comprenant deux ensembles stabilisateurs comprenant chacun un bloc et un coin.

Un des buts de l'invention est de proposer une installation nucléaire comprenant un dispositif d'accrochage simple d'utilisation et fiable.

A cet effet, l'invention propose une installation nucléaire selon la revendication 1.

L'installation nucléaire peut comprendre en option une ou plusieurs des caractéristiques des revendications 2 à 10.

L'invention et ses avantages seront mieux compris à la lecture de la description qui va suivre, donnée uniquement à titre d'exemple et faite en référence aux dessins annexés, sur lesquels :
- la Figure 1 est une vue en perspective d'un dispositif d'accrochage selon l'invention comprenant une partie mâle et une partie femelle, avant accrochage ;
- la Figure 2 est une vue en perspective du dispositif d'accrochage de la Figure 1 après accrochage ;
- la Figure 3 est une vue de face de la partie femelle du dispositif d'accrochage de la Figure 1, fixée sur une surface ;
- la Figure 4 est une vue de dessous de la partie femelle de la Figure 3 ;
- la Figure 5 est une vue de face de la partie mâle du dispositif d'accrochage de la Figure 1 ;
- la Figure 6 est une vue de dessus de la partie mâle de la Figure 5 fixée sur un support ;
- la Figure 7 est une vue en section transversale du dispositif d'accrochage selon VII-VII sur la Figure 2 ; et
- la Figure 8 est une vue en coupe de la partie mâle selon VIII-VIII sur la Figure 5.

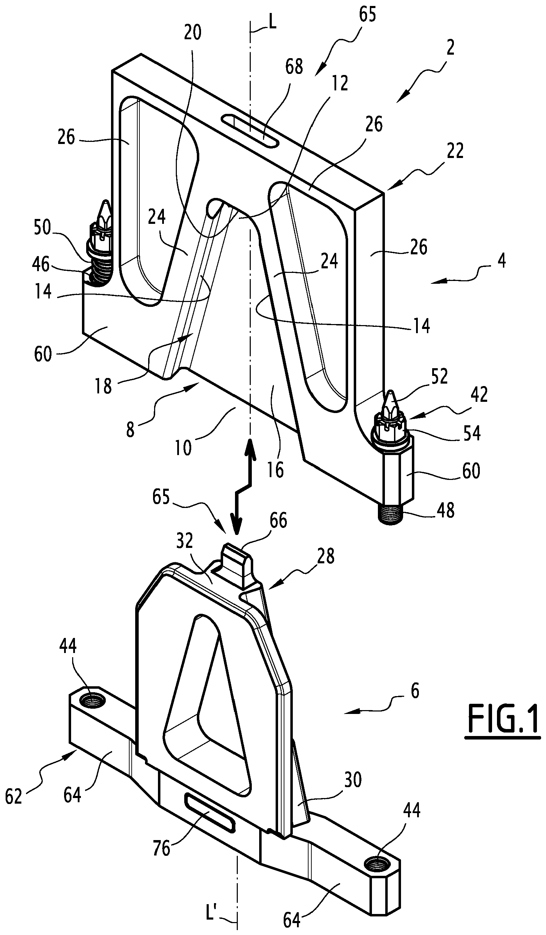

Le dispositif d'accrochage 2 illustré sur la Figure 1 comprend une partie femelle 4 et une partie mâle 6 complémentaires configurées pour s'emboîter l'une dans l'autre suivant un axe longitudinal L de manière à s'accrocher mutuellement.

La partie femelle 4 et la partie mâle 6 sont destinées à être fixées chacune sur un élément respectif de manière à pouvoir accrocher les deux éléments l'un à l'autre à l'aide du dispositif d'accrochage 2.

La partie femelle 4 comprend une rainure 8 s'étendant suivant l'axe longitudinal L entre une première extrémité de rainure 10 et une deuxième extrémité de rainure 12. La rainure 8 présente une largeur décroissante longitudinalement de la première extrémité de rainure 10 à la deuxième extrémité de rainure 12. La première extrémité de rainure 10 est plus large que la deuxième extrémité de rainure 12.

La rainure 8 est délimitée latéralement par deux parois latérales 14 en regard l'une de l'autre. Les parois latérales 14 s'étendent le long de l'axe longitudinal L en convergeant l'une vers l'autre de la première extrémité de rainure 10 à la deuxième extrémité de rainure 12.

Chaque paroi latérale 14 s'étend suivant une direction respective inclinée par rapport à l'axe longitudinal L. L'angle α formé entre les directions respectives des deux parois latérales 14 est compris entre 8° et 60°.

La rainure 8 est délimitée par un fond 16. Le fond 16 s'étend transversalement entre la base des parois latérales 14.

La rainure 8 débouche perpendiculairement à l'axe longitudinal L par une ouverture longitudinale 18. L'ouverture longitudinale 18 est délimitée entre des bords libres des parois latérales 14. Chaque paroi latérale 14 s'étend entre le fond 16 et l'ouverture longitudinale 18.

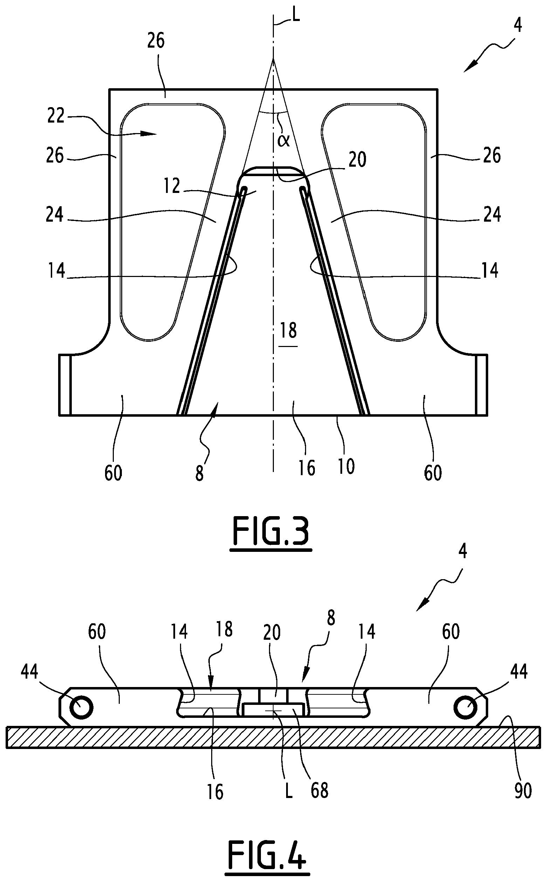

L'ouverture longitudinale 18 présente en vue de face (Figure 3) un contour trapézoïdal isocèle dont les deux côtés opposés inclinés l'un par rapport à l'autre sont définis par les parois latérales 14.

La première extrémité de rainure 10 est débouchante. La deuxième extrémité de rainure 12 est fermée par une paroi d'extrémité 20. En variante la deuxième extrémité de rainure 12 est débouchante.

Comme illustré sur la Figure 4 qui est une vue de dessous de la partie femelle 4 de la Figure 3, la rainure 8 présente une section transversale en queue d'aronde.

La rainure 8 est plus étroite à son ouverture longitudinale 18 et plus large à sa base à proximité du fond 16. Les parois latérales 14 convergent l'une vers l'autre en direction de l'ouverture longitudinale 18. Les parois latérales 14 délimitent ici un profil sensiblement trapézoïdal isocèle.

Dans l'exemple illustré, la partie femelle 4 comprend une plaque 22 munie sur au moins une face de nervures délimitant entre elles des cavités (Figure 3).

La rainure 8 est délimitée entre deux nervures d'accrochage 24 inclinées l'une par rapport à l'autre, formant ici un « V ».

Chaque nervure d'accrochage 24 délimite une paroi latérale 14 respective, qui est formée par une face de la nervure d'accrochage 24 tournée vers l'autre nervure d'accrochage 24.

Le fond 16 est formé par la région de la plaque 22 s'étendant transversalement entre les nervures d'accrochage 24.

La plaque 22 est munie de nervures périphériques 26 s'étendant le long des bords de la plaque 22.

La plaque 22 comprend une nervure périphérique 26 transversale s'étendant perpendiculairement l'axe longitudinal L et deux nervures périphériques 26 longitudinales s'étendant suivant l'axe longitudinal L, chacune à partir d'une extrémité respective de la nervure périphérique 26 transversale. Chaque nervure d'accrochage 24 s'étend obliquement entre l'extrémité d'une nervure périphérique 26 longitudinale respective et un tronçon central de la nervure périphérique 26 transversale. Les nervures d'accrochage 24 convergent et rejoignent une nervure périphérique 26 fermant la deuxième extrémité de rainure 12 de la rainure 8.

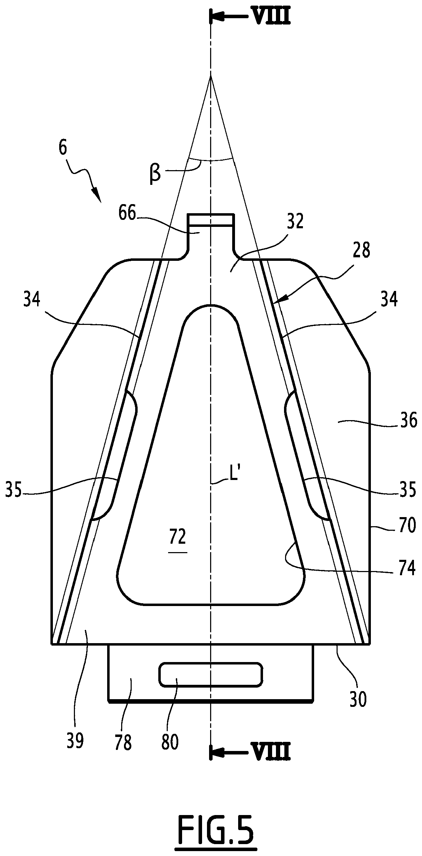

Comme illustré sur la Figure 5, la partie mâle 6 comprend un coulisseau 28 configuré pour être logé dans la rainure 8. Le coulisseau 28 présente une forme complémentaire de celle de la rainure 8. Le coulisseau 28 inséré dans la rainure 8 permet d'accrocher mutuellement la partie mâle 6 et la partie femelle 4

Le coulisseau 28 s'étend suivant l'axe de coulisseau L' entre une première extrémité de coulisseau 30 et une deuxième extrémité de coulisseau 32 en s'effilant. La première extrémité de coulisseau 30 est plus large que la deuxième extrémité de coulisseau 32.

Le coulisseau 28 possède deux faces latérales 34 opposées délimitant latéralement le coulisseau 28. Les faces latérales 34 s'étendent entre la première extrémité de coulisseau 30 et la deuxième extrémité de coulisseau 32. Les faces latérales 34 convergent l'une vers l'autre de la première extrémité de coulisseau 30 vers la deuxième extrémité de coulisseau 32.

Le coulisseau 28 présente en vue de face (Figure 5) un contour trapézoïdal isocèle dont les côtés opposés mutuellement inclinés sont définis par les faces latérales 34. Les faces latérales 34 s'étendent suivant des directions respectives faisant entre elles un angle β sensiblement égal à l'angle α entre les directions d'extension des parois latérales 14.

Chaque face latérale 34 est munie, dans sa partie médiane entre la première extrémité de coulisseau 30 et la deuxième extrémité de coulisseau 32, d'un évidement 35.

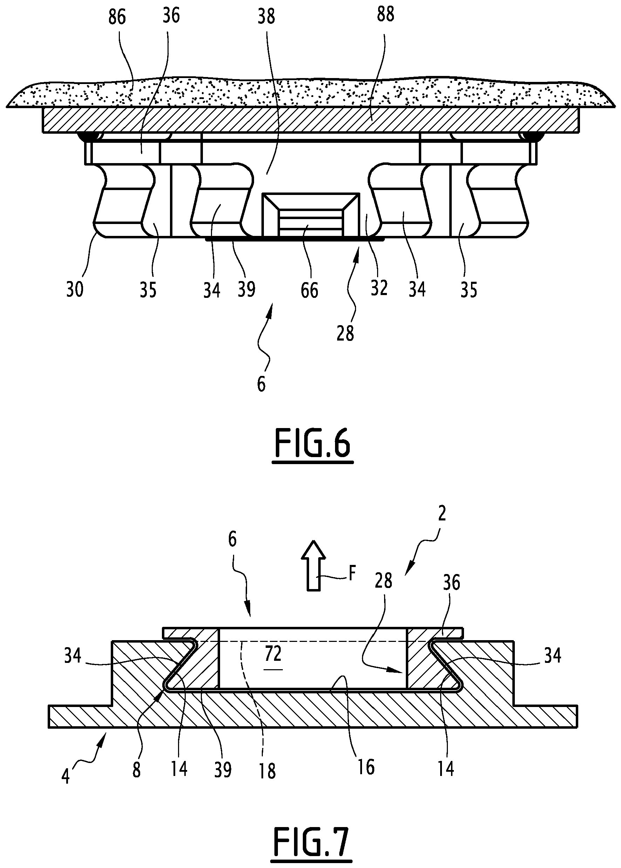

Comme visible sur la Figure 6, qui est une vue de dessus du coulisseau 28 de la Figure 5, le coulisseau 28 présente une section transversale en queue d'aronde complémentaire de celle de la rainure 8. Les faces latérales 34 sont inclinées l'une par rapport à l'autre.

La partie mâle 6 comprend une base 36 rigidement solidaire du coulisseau 28. La base 36 est de préférence venue de matière avec le coulisseau 28. Le coulisseau 28 est plus étroit à sa naissance 38 adjacente à la base 36 qu'à une face frontale 39 opposée à la base 36.

La base 36 présente la forme d'une plaque. En vue de face (Figure 5), la base 36 déborde transversalement par rapport au coulisseau 28.

La rainure 8 est propre à être engagée sur le coulisseau 28 par coulissement relatif suivant l'axe longitudinal L, de la première extrémité de rainure 10 vers la deuxième extrémité de rainure 12.

La rainure 8 est propre à être engagée sur le coulisseau 28 après alignement de l'axe de coulisseau L' avec l'axe longitudinal L suivant lequel s'étend la rainure 8.

Lorsque l'axe de coulisseau L' est aligné avec l'axe longitudinal L, du fait des formes convergentes complémentaires de la rainure 8 et du coulisseau 28, sous l'effet d'une force tendant à déplacer le coulisseau 28 par rapport à la rainure 8 suivant l'axe longitudinal L en direction de la deuxième extrémité de rainure 12, le coulisseau 28 reçu dans la rainure 8 vient en butée dans celle-ci. De plus l'axe de coulisseau L' et l'axe longitudinal L de la rainure 8 s'alignent mutuellement.

Le coulisseau 28 vient en butée dans la rainure 8 suivant l'axe longitudinal L par contact de ses faces latérales 34 avec les parois latérales 14 de la rainure 8 et éventuellement par contact de sa deuxième extrémité de coulisseau 32 avec la paroi d'extrémité 20 fermant la deuxième extrémité de rainure 12.

En outre, comme illustré sur la Figure 7, lorsque le coulisseau 28 vient en butée dans la rainure 8, les sections transversales complémentaires de la rainure 8 et du coulisseau 28 empêchent l'extraction du coulisseau 28 hors de la rainure 8 transversalement à l'axe longitudinal L, en particulier au travers de l'ouverture longitudinale 18 suivant la flèche F.

Le coulisseau 28 et la rainure 8 engagés l'un dans l'autre autorisent uniquement le coulissement de la partie mâle 6 par rapport à la partie femelle 4 suivant l'axe longitudinal L, de la deuxième extrémité de rainure 12 vers la première extrémité de rainure 10.

Les évidements 35 permettent de réduire la longueur d'usinage et la portée des surfaces en vis-à-vis. Les valeurs des angles α et β sont supérieures à celles d'un cône morse de façon à empêcher les faces latérales 34 et les parois latérales 14 appliquées les unes contre les autres d'adhérer mutuellement.

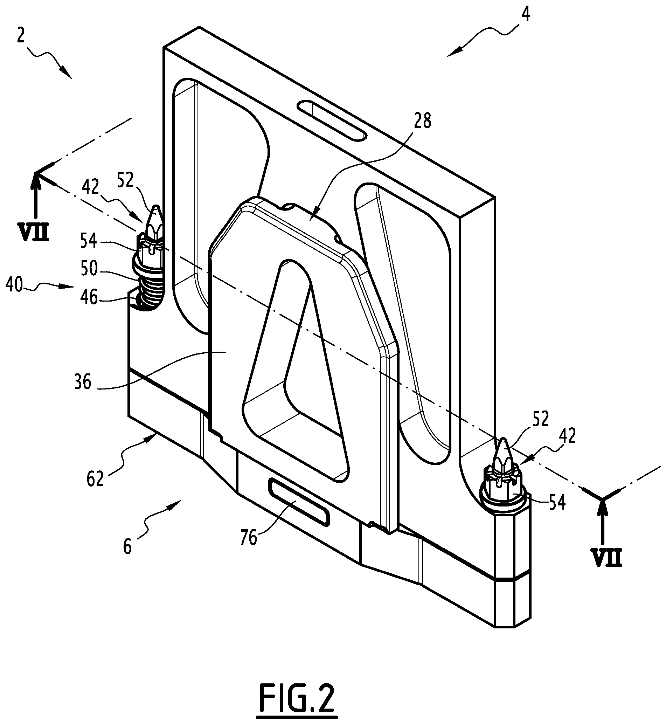

En revenant aux Figures 1 et 2, le dispositif d'accrochage 2 comprend un dispositif de verrouillage 40 propre à empêcher le coulisseau 28 de coulisser selon l'axe longitudinal L hors de la rainure 8, de la deuxième extrémité de rainure 12 vers la première extrémité de rainure 10.

Le dispositif de verrouillage 40 comprend à cet effet des organes de verrouillage complémentaires prévus sur la partie femelle 4 et la partie mâle 6 et propres à coopérer pour empêcher une translation selon l'axe longitudinal L de la partie mâle 6 par rapport à la partie femelle 4 tendant à extraire le coulisseau 28 de la rainure 8.

Les organes de verrouillage comprennent par exemple au moins une vis de verrouillage 42, prévue sur l'une de la partie femelle 4 et de la partie mâle 6, chaque vis de verrouillage 42 étant configurée pour être vissée dans un trou taraudé 44 (Figure 1) complémentaire prévu sur l'autre de la partie femelle 4 et la partie mâle 6.

Chaque vis de verrouillage 42 est montée captive et rotative sur celle de la partie femelle 4 et de la partie mâle 6 sur laquelle elle est montée.

Chaque vis de verrouillage 42 est montée captive dans un orifice de réception 46 dans laquelle la vis de verrouillage 42 est reçue coulissante entre une position active dans laquelle le filetage 48 de la vis de verrouillage 42 fait saillie de l'orifice de réception 46 pour son vissage dans un trou taraudé 44 de réception de la vis de verrouillage 42 (à droite sur la Figure 1), et une position de repos dans laquelle le filetage 48 de la vis de verrouillage 42 est rétracté dans l'orifice de réception 46 (à gauche sur la Figure 1).

Chaque vis de verrouillage 42 est rappelée en position de repos par un organe de rappel 50 et coulisse dans l'orifice de réception 46 associé vers la position active à l'encontre de l'organe de rappel 50.

Dans l'exemple illustré, deux vis de verrouillage 42 sont montées captives et rotatives sur la partie femelle 4, et la partie mâle 6 est munie de deux trous taraudés 44, chacun prévu pour le vissage d'une vis de verrouillage 42 respective. Les orifices de réception 46 sont ménagés dans la partie femelle 4.

Chaque vis de verrouillage 42 comprend une tige 52 portant le filetage 48 à une première extrémité et une tête de vis 54 rapportée et fixée sur une deuxième extrémité. Ceci permet d'insérer la tige 52 dans l'orifice de réception 46 en commençant par sa deuxième extrémité, puis de rapporter la tête de vis 54 pour le montage captif de la vis de verrouillage 42, retenue axialement dans l'orifice de réception 46 dans un sens par le filetage 48 et dans l'autre sens par la tête de vis 54.

La partie femelle 4 comprend deux protubérances 60 s'étendant de part et d'autre de la première extrémité de rainure 10 en saillie latéralement vers l'extérieur. Chaque protubérance 60 est munie d'un orifice de réception 46 qui reçoit une vis de verrouillage 42 respective.

Le dispositif de verrouillage 40 comprend une partie de verrouillage 62 fixée sur la partie mâle 6 à la première extrémité de coulisseau 30 et qui comprend deux extensions 64 latérales s'étendant latéralement vers l'extérieur de part et d'autre de la première extrémité de coulisseau 30. Chaque extension 64 étant munie d'un trou taraudé 44.

Le dispositif de verrouillage 40 est propre à être verrouillé lorsque le coulisseau 28 est engagé et en butée longitudinalement dans la rainure 8.

Lorsque le coulisseau 28 est engagé et en butée longitudinalement dans la rainure 8, chaque vis de verrouillage 42 est alignée avec le trou taraudé 44 correspondant de telle manière à être pouvoir vissée dans celui-ci. Le dispositif de verrouillage 40 est ici verrouillé par vissage des visses 42.

Une fois les vis de verrouillage 42 vissées, le coulisseau 28 est empêché de coulisser longitudinalement hors de la rainure 8. Il en résulte que la partie femelle 4 et la partie mâle 6 sont maintenues fermement accrochées l'une à l'autre (Figure 2).

Ainsi, lorsqu'il est verrouillé, le dispositif de verrouillage 40 empêche le coulisseau 28 de coulisser longitudinalement hors de la rainure 8.

Pour permettre de séparer la partie femelle 4 et la partie mâle 6, il est nécessaire au préalable de déverrouiller le dispositif de verrouillage 40, ici en dévissant les vis de verrouillage 42.

Lorsqu'il est déverrouillé, le dispositif de verrouillage 40 autorise le coulissement du coulisseau 28 longitudinalement hors de la rainure 8.

Le dispositif d'accrochage 2 comprend un dispositif de guidage 65 configuré pour guider la partie femelle 4 et la partie mâle 6 en coulissement selon l'axe longitudinal L l'une par rapport à l'autre avant que le coulisseau 28 ne soit en prise avec les parois latérales 14 de la rainure 8.

Le dispositif de guidage 65 comprend une saillie de guidage 66 et un orifice de guidage 68 configuré pour recevoir la saillie de guidage 66 à coulissement suivant l'axe longitudinal L lors de l'insertion du coulisseau 28 dans la rainure 8.

La saillie de guidage 66 est ici prévue sur la partie mâle 6 et s'étend selon l'axe de coulisseau L', et l'orifice de guidage 68 est ici prévu sur la partie femelle 4 et s'étend selon l'axe longitudinal L. En variante, la saillie de guidage 66 est prévue sur la partie femelle 4 et l'orifice de guidage 68 est prévu sur la partie mâle 6.

La saillie de guidage 66 fait saillie de la deuxième extrémité de coulisseau 32 et l'orifice de guidage 68 est ménagé à la deuxième extrémité de rainure 12 de la rainure 8, dans la paroi d'extrémité 20.

La saillie de guidage 66 est configurée pour commencer à s'insérer dans l'orifice de guidage 68 avant que les faces latérales 34 du coulisseau 28 ne soient en prise avec les parois latérales 14 de la rainure 8 lors de l'insertion du coulisseau 28 dans la rainure 8.

La saillie de guidage 66 est configurée pour se dégager complètement de l'orifice de guidage 68 après que les faces latérales 34 du coulisseau 28 sont dégagées des parois latérales 14 de la rainure 8 lors de l'extraction du coulisseau 28 hors de la rainure 8.

Du fait de la forme convergente de la rainure 8 et du coulisseau 28, lorsque le coulisseau 28 est en butée dans la rainure 8, un coulissement selon l'axe longitudinal L du coulisseau 28 dans la rainure 8 dans le sens de l'extraction d'amplitude inférieure à la longueur de la rainure 8 permet néanmoins de dégager les faces latérales 34 des parois latérales 14 et d'extraire le coulisseau 28 transversalement selon la flèche F de la Figure 7 par l'ouverture longitudinale 18 de la rainure 8.

Le dispositif de guidage 65 permet d'augmenter la course longitudinale nécessaire pour permettre une telle extraction. Un tel coulissement pourrait résulter par exemple de vibrations entre la partie femelle 4 et la partie mâle 6 telles que celles provoquées par un séisme.

La partie femelle 4 et la partie mâle 6 sont prévues pour être fixées chacune sur un élément respectif, de telle manière à permettre l'accrochage mutuel desdits éléments.

La partie femelle 4 est soudée ou visée sur l'élément associé et la partie mâle 6 est soudée ou vissée sur l'élément associé.

Comme visible sur la Figure 5, dans un mode de réalisation, la partie mâle 6 est par exemple soudée sur l'élément associé, en soudant un bord externe 70 de la partie mâle 6 sur ledit élément associé au moyen d'une soudure externe. Le bord externe 70 est ici le bord périphérique de la base 36 de la partie mâle 6.

La partie mâle 6 comprend une lumière 72 traversant la partie mâle 6 perpendiculairement à l'axe longitudinal L, au travers du coulisseau 28. En vue de face (Figure 5), la lumière 72 présente de préférence un contour interne de forme trapézoïdale isocèle ou triangulaire qui suit le contour externe du coulisseau 28. La lumière 72 définit un bord interne 74 permettant de fixer la partie mâle 6 sur l'élément associé par soudage du bord interne 74 au moyen d'une soudure interne.

La fixation de la partie mâle 6 à l'aide d'une soudure externe et d'une soudure interne permet d'améliorer la fixation et permet en particulier une meilleure résistance aux sollicitations de direction quelconque provoquées par un séisme.

Chaque soudure est réalisée le long du bord correspondant par exemple sous la forme d'un cordon de soudure continu ou discontinu. Chaque soudure est réalisée par exemple par soudure TIG ou MIG.

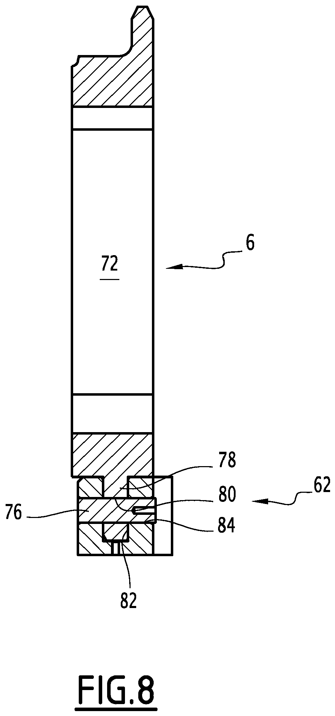

Comme visible sur la Figure 8, la partie de verrouillage 62 est rapportée et fixée de manière amovible sur la partie mâle 6.

Dans l'exemple illustré, la fixation est réalisée par l'intermédiaire d'une clavette 76 insérée au travers d'orifices de clavetage 80, 84 ménagés dans la partie mâle 6 et la partie de verrouillage 62.

La partie mâle 6 comprend un tenon 78 au travers duquel est ménagé un orifice de clavetage 80. La partie de verrouillage 62 comprend une mortaise 82 de réception du tenon 78 et un orifice de clavetage 84 intersectant la mortaise 82. La partie de verrouillage 62 est fixée sur la partie mâle 6 par insertion du tenon 78 dans la mortaise 82, de sorte que les orifices de clavetage 80, 84 sont alignés, puis par insertion de la clavette 76 dans les orifices de clavetage 80, 84.

La réalisation d'une partie de verrouillage 62 séparée de la partie mâle 6 facilite le soudage de la partie mâle 6. La partie de verrouillage 62 amovible peut de plus être remplacée en cas de détérioration des trous taraudés 44. Elle permet en outre d'adapter si nécessaire la géométrie de la partie de verrouillage 62 en fonction de celle de la partie femelle 4 destinée à être accrochée sur la partie mâle 6. La fixation par clavette est simple et rapide à mettre en oeuvre, en particulier sous eau.

Le dispositif d'accrochage 2 est avantageusement utilisé pour suspendre un élément à un autre. L'axe longitudinal L est de préférence orienté verticalement. Dans un tel cas, le coulisseau 28 est maintenu longitudinalement en butée dans la rainure 8 sous l'effet de la gravité.

Par exemple, la partie mâle 6 est fixée sur un support, de manière à permettre de suspendre la partie femelle 4 sur le support en l'accrochant à la partie mâle 6. La partie mâle 6 est fixée sur le support avec l'axe longitudinal L orienté verticalement, la largeur du coulisseau 28 diminuant vers le haut. Dans ce cas, la partie femelle 4 est suspendue à la partie mâle 4 en engageant la rainure 8 sur le coulisseau 28, et la gravité exerce sur la partie femelle 6 un effort dirigé verticalement vers le bas sollicitant la rainure 8 en appui sur le coulisseau 28 qui est en butée dans la rainure 8.

En variante, la partie femelle 4 est fixée sur le support, de telle manière à permettre de suspendre la partie mâle 6 sur le support en l'accrochant à la partie femelle 4. La partie femelle 4 est fixée sur le support avec l'axe longitudinal L orienté verticalement, la largeur de la rainure 8 diminuant vers le bas. Dans ce cas, la partie mâle 6 est suspendue à la partie femelle 4 en insérant le coulisseau 28 dans la rainure 8, et la gravité exerce sur la partie mâle 4 un effort dirigé verticalement vers le bas sollicitant le coulisseau 28 en butée dans la rainure 8.

Dans un mode de réalisation, le dispositif d'accrochage 2 est disposé dans une piscine d'une installation nucléaire.

Par exemple, la partie mâle 6 est fixée sur un support métallique 88 ancré dans la paroi interne 86 d'une piscine de réacteur nucléaire d'une installation nucléaire (Figure 6). La partie femelle 4 est fixée sur une surface externe 90 d'un outil ou d'une alvéole de réception d'un assemblage de combustible nucléaire (Figure 4).

En fonctionnement, l'opérateur étant sur le bord de la piscine ou sur une passerelle, l'outil ou l'alvéole à accrocher, muni de la partie femelle 4, est manutentionné par l'opérateur par exemple à l'aide d'un outil de manutention accroché à un pont de manutention. L'opérateur positionne la partie femelle 4 à proximité de la partie mâle 6 puis déplace transversalement l'outil de manutention jusqu'à ce que le fond 16 de la partie femelle 4 vienne contacter la face frontale 39 du coulisseau 28. L'opérateur déplace ensuite verticalement vers le bas l'outil de manutention jusqu'à ce que le coulisseau 28 soit en butée dans la rainure 8. L'opérateur déconnecte alors l'outil de manutention puis, par des moyens connus, vient verrouiller le dispositif de verrouillage 40.

L'opération est de préférence surveillée par des moyens de contrôle et/ou de mesure, par exemple par contrôle visuel à l'aide de dispositifs de contrôle visuel tels que des caméras immergées..., mesure d'efforts, en particulier de la mise en butée du coulisseau 28 dans la rainure 8, par peson... Le dispositif d'accrochage 2 permet ainsi de suspendre l'outil ou l'alvéole sur la paroi interne 86 de la piscine.

Grâce à l'invention, l'accrochage et le décrochage d'un équipement ou d'un support d'équipement sont simples, en particulier lorsqu'ils sont effectués à distance et sous eau comme c'est le cas dans une piscine d'une installation nucléaire.

Le dispositif d'accrochage 2 permet un autocentrage et une localisation relative précise des éléments accrochés l'un sur l'autre à l'aide du dispositif d'accrochage 2.

Le dispositif d'accrochage 2 permet un accrochage simple, fiable et résistant, en particulier en cas de séisme. Le dispositif d'accrochage 2 limite les risques de coincement et de décrochage involontaire, par exemple sous l'effet des vibrations provoquées par un séisme.

## Revendications

1. Installation nucléaire, comprenant une piscine remplie d'eau et au moins un dispositif d'accrochage comprenant une partie femelle (4) et une partie mâle (6), l'une de la partie mâle (6) et de la partie femelle (4) étant fixée sur une paroi interne (86) de la piscine, la partie femelle (4) comprenant une rainure (8) s'étendant suivant un axe longitudinal (L), la rainure (8) possédant une largeur décroissante longitudinalement d'une première extrémité de rainure (10) à une deuxième extrémité de rainure (12) et une section transversale, la rainure (8) étant délimitée latéralement par deux parois latérales (14) en regard l'une de l'autre, les parois latérales (14) s'étendant le long de l'axe longitudinal (L) en convergeant l'une vers l'autre de la première extrémité de rainure (10) à la deuxième extrémité de rainure (12), la rainure (8) débouchant perpendiculairement à l'axe longitudinal (L) par une ouverture longitudinale (18) délimitée entre des bords libres des parois latérales (14), la partie mâle (6) comprenant un coulisseau (28) de forme complémentaire de celle de la rainure (8) et propre à être inséré longitudinalement dans la rainure (8), la section transversale de la rainure (8) étant configurée de telle manière à empêcher l'extraction du coulisseau (28) hors de la rainure (8) transversalement à l'axe longitudinal (L), le dispositif d'accrochage comprenant un dispositif de verrouillage (40) propre à empêcher le coulisseau (28) de coulisser longitudinalement hors de la rainure (8).

2. Installation nucléaire selon la revendication 1, dans laquelle la section transversale de la rainure (8) possède au moins une queue d'aronde.

3. Installation nucléaire selon la revendication 1 ou 2, dans laquelle le dispositif de verrouillage (40) comprend au moins une vis de verrouillage (42).

4. Installation nucléaire selon la revendication 3, dans laquelle au moins une vis de verrouillage (42) est montée rotative sur l'une de la partie femelle (4) et de la partie mâle (6), l'autre de la partie femelle (4) et la partie mâle (6) comprenant un trou taraudé (44) de réception de la vis de verrouillage (42).

5. Installation nucléaire selon la revendication 4, dans laquelle la au moins une vis de verrouillage (42) est montée captive sur l'une de la partie femelle (4) et de la partie mâle (6).

6. Installation nucléaire selon l'une quelconque des revendications précédentes, dans laquelle la partie mâle (6) comprend une lumière (72) traversant la partie mâle (6) au travers du coulisseau (28) de manière à définir un bord interne (74) de fixation de la partie mâle (6) au travers du coulisseau (28).

7. Installation nucléaire selon l'une quelconque des revendications précédentes, dans laquelle le dispositif de verrouillage (40) comprend une partie de verrouillage (62) rapportée et fixée sur la partie mâle (6), le dispositif de verrouillage (40) étant prévu pour retenir la partie femelle (4) sur la partie de verrouillage (62).

8. Installation nucléaire selon la revendication 7, dans laquelle la partie de verrouillage (62) est fixée sur la partie mâle (6) à l'aide d'au moins une clavette (76).

9. Installation nucléaire selon l'une quelconque des revendications précédentes, comprenant un dispositif de guidage (65) pour guider le coulisseau (28) en coulissement longitudinal dans la rainure (8) avant que le coulisseau (28) ne soit en prise avec des parois latérales (14) de la rainure (8).

10. Installation nucléaire selon la revendication 9, dans laquelle le dispositif de guidage (65) comprend une saillie de guidage (66) sur l'une de la partie femelle (4) et de la partie mâle (6) et un orifice de guidage (68) sur l'autre de la partie femelle (4) et de la partie mâle (6), l'orifice de guidage (68) recevant la saillie de guidage (66) en coulissement longitudinal lors de l'insertion du coulisseau (28) dans la rainure (8).

## Patentansprüche

1. Nuklearanlage, aufweisend ein mit Wasser gefülltes Becken und mindestens eine Befestigungsvorrichtung, die aufweist: einen Buchsenteil (4) und einen Steckerteil (6), wobei einer von dem Steckerteil (6) und dem Buchsenteil (4) an einer Innenwand (86) des Beckens fixiert ist, wobei der Buchsenteil (4) eine Nut (8) aufweist, die sich entlang einer Längsachse (L) erstreckt, wobei die Nut (8) eine in Längsrichtung von einem ersten Nutende (10) zu einem zweiten Nutende (12) abnehmende Breite und einen Querschnitt hat, wobei die Nut (8) seitlich durch zwei Seitenwände (14) begrenzt ist, die einander zugewandt sind, wobei die Seitenwände (14) sich entlang der Längsachse (L) erstrecken, wobei sie von dem ersten Nutende (10) zu dem zweiten Nutende (12) aufeinander zu laufen, wobei die Nut (8) senkrecht zu der Längsachse (L) in eine Längsöffnung (18) ausmündet, die zwischen freien Rändern der Seitenwände (14) begrenzt ist, wobei der Steckerteil (6) ein Gleitstück (28) aufweist, das eine zu derjenigen der Nut (8) komplementäre Form hat und geeignet ist, in Längsrichtung in die Nut (8) eingesetzt zu sein, wobei der Querschnitt der Nut (8) konfiguriert ist, um das Entfernen des Gleitstücks (28) aus der Nut (8) quer zu der Längsachse (L) zu verhindern, wobei die Befestigungsvorrichtung eine Verriegelungsvorrichtung (40) aufweist, die in der Lage ist, zu verhindern, dass das Gleitstück (28) in Längsrichtung aus der Nut (8) herausgleitet.

2. Nuklearanlage gemäß Anspruch 1, wobei der Querschnitt der Nut (8) mindestens einen Schwalbenschwanz aufweist.

3. Nuklearanlage gemäß Anspruch 1 oder 2, wobei die Verriegelungsvorrichtung (40) mindestens eine Verriegelungsschraube (42) aufweist.

4. Nuklearanlage gemäß Anspruch 3, wobei mindestens eine Verriegelungsschraube (42) drehbar an einem von dem Buchsenteil (4) und dem Steckerteil (6) montiert ist, wobei der andere von dem Buchsenteil (4) und dem Steckerteil (6) eine Gewindebohrung (44) zum Aufnehmen der Verriegelungsschraube (42) aufweist.

5. Nuklearanlage gemäß Anspruch 4, wobei die mindestens eine Verriegelungsschraube (42) gefangen an dem einen von dem Buchsenteil (4) und dem Steckerteil (6) montiert ist.

6. Nuklearanlage gemäß irgendeinem der vorhergehenden Ansprüche, wobei der Steckerteil (6) ein Lumen (72) aufweist, welches den Steckerteil (6) durch das Gleitstück (28) hindurch durchquert, um einen Innenrand (74) zum Befestigen des Steckerteils (6) durch das Gleitstück (28) hindurch zu definieren.

7. Nuklearanlage gemäß irgendeinem der vorhergehenden Ansprüche, wobei die Verriegelungsvorrichtung (40) einen Verriegelungsteil (62) aufweist, der an dem Steckerteil (6) angebracht und befestigt ist, wobei die Verriegelungsvorrichtung (40) vorgesehen ist, um den Buchsenteil (4) an dem Verriegelungsteil (62) zu halten.

8. Nuklearanlage gemäß Anspruch 7, wobei der Verriegelungsteil (62) mit Hilfe mindestens eines Keils (76) an dem Steckerteil (6) befestigt ist.

9. Nuklearanlage gemäß irgendeinem der vorhergehenden Ansprüche, aufweisend eine Führungsvorrichtung (65), um das Gleitstück (28) in Längsrichtung gleitend in der Nut (8) zu führen, bevor das Gleitstück (28) mit den Seitenwänden (14) der Nut (8) in Eingriff gelangt.

10. Nuklearanlage gemäß Anspruch 9, wobei die Führungsvorrichtung (65) einen Führungsvorsprung (66) an dem einen von dem Buchsenteil (4) und dem Steckerteil (6) und eine Führungsöffnung (68) an dem anderen von dem Buchsenteil (4) und dem Steckerteil (6) aufweist, wobei die Führungsöffnung (68) den Führungsvorsprung (66) beim Einsetzen des Gleitstücks (28) in die Nut (8) in Längsrichtung gleitend aufnimmt.

## Claims

1. A nuclear facility, comprising a pool filled with water and at least one anchor device comprising a female part (4) and a male part (6), one of the male part (6) and the female part (4) being attached onto an internal wall (86) of the pool, the female part (4) comprising a groove (8) extending along a longitudinal axis (L), the groove (8) having a width longitudinally decreasing from a first groove end (10) to a second groove end (12) and a transverse section, the groove (8) being laterally delimited by two side walls (14) facing each other, the side walls (14) extending along the longitudinal axis (L) while converging towards each other from the first groove end (10) to the second groove end (12), the groove (8) opening out perpendicularly to the longitudinal axis (L) through a longitudinal aperture (18) delimited between free edges of the side walls (14), the male part (6) comprising a slider (28) with a shape mating that of the groove (8) and able to be longitudinally inserted into the groove (8), the transverse section of the groove (8) being configured so as to prevent extraction of the slider (28) out of the groove (8) transversely to the longitudinal axis (L), the anchor device comprising a locking device (40) able to prevent the slider (28) from longitudinally sliding out of the groove (8).

2. The nuclear facility according to claim 1, wherein the transverse section of the groove (8) has at least one dovetail.

3. The nuclear facility ty according to claim 1 or 2, wherein the locking device (40) comprises at least one locking screw (42).

4. The nuclear facility according to claim 3, wherein at least one locking screw (42) is rotatably mounted on one of the female part (4) and of the male part (6), the other one of the female part (4) and the male part (6) comprising a tapped hole (44) for receiving the locking screw (42).

5. The nuclear facility according to claim 4, wherein said at least one locking screw (42) is mounted so as to be captive on one of the female part (4) and of the male part (6).

6. The nuclear facility according to any of the preceding claims, wherein the male part (6) comprises a lumen (72) extending through the male part (6) through the slider (28) so as to define an internal edge (74) for attachment of the male part (6) through the slider (28).

7. The nuclear facility according to any of the preceding claims, wherein the locking device (40) comprises a locking portion (62) added to and attached onto the male part (6), the locking device (40) being provided for retaining the female portion (4) on the locking portion (62).

8. The nuclear facility according to claim 7, wherein the locking portion (62) is attached onto the male part (6) by means of at least one key (76).

9. The nuclear facility according to any of the preceding claims, comprising a guiding device (65) for guiding the slider (28) when longitudinally sliding in the groove (8) before the slider (28) is engaged with the side walls (14) of the groove (8).

10. The nuclear facility according to claim 9, wherein that the guiding device (65) comprises a guiding protrusion (66) on the one of the female part (4) and of the male part (6) and a guiding orifice (68) on the other one of the female part (4) and of the male part (6), the guiding orifice (68) receiving the guiding protrusion (66) during longitudinal sliding upon inserting the slider (28) into the groove (8).
